# EUROPÄISCHE PATENTANMELDUNG

(11) **EP 1 148 623 A2**
(43) Veröffentlichungstag der Anmeldung: **24.10.2001**
(21) Anmeldenummer: 01103319.8
(22) Anmeldetag: 13.02.2001
(51) Int. Cl.: H02M 3/155

(54) **Stromversorgungseinrichtung**

(30) Priorität: 08.04.2000 DE 10017590
(71) Anmelder: Mannesmann VDO Aktiengesellschaft, 60388 Frankfurt am Main (DE)
(72) Erfinder: Joch, Christoph, 65824 Schwalbach (DE)
(74) Vertreter: Rassler, Andrea, Dipl.-Phys.

(57) **Zusammenfassung**

Bei einer Stromversorgungseinrichtung, der eine Gleichspannung zuführbar ist und welche eine stabilisierte Spannung zum Betrieb einer elektronischen Schaltung in einem Kraftfahrzeug abgibt, ist zwischen einem Eingang für die Betriebsspannung und einem Eingang eines Spannungsreglers ein Hochsetzsteller angeordnet, der bei einer Batteriespannung unterhalb eines vorgegebenen Schwellwertes aktiviert wird und die Batteriespannung auf mindestens den Schwellwert heraufsetzt.

## Beschreibung

Die Erfindung betrifft eine Stromversorgungseinrichtung, der eine Gleichspannung zuführbar ist und welche eine stabilisierte Spannung zum Betrieb einer elektronischen Schaltung in einem Kraftfahrzeug abgibt.

In Bordnetzen von Kraftfahrzeugen ist die Spannung starken Schwankungen in einem Bereich von 6V bis 27V bei einer Nennspannung von 14V unterworfen. Da viele Halbleiterschaltungen für eine Nennspannung von 5V ausgelegt sind, ist üblicherweise für derartige Halbleiterschaltungen, insbesondere Steuergeräte, ein Spannungsregler vorgesehen, der die schwankende Batteriespannung auf 5V stabilisiert. Beim Starten des Kraftfahrzeugmotors wird jedoch die Batterie so hoch belastet, daß Spannungseinbrüche auf unter 5V möglich sind. Dabei ist die Funktion von Steuergeräten in Frage gestellt. Bei üblichen in den Steuergeräten verwendeten Controllern wird ein Reset bei Unterschreiten von 4,5V +- 7% durchgeführt. Da im Spannungsregler ein gewisser Spannungsabfall von beispielsweise 0,4V erfolgt, liegt die untere Grenze für die Gleichspannung bei etwa 5V.

Aufgabe der vorliegenden Erfindung ist es, einen Betrieb von Steuergeräten auch bei einer Gleichspannung von weniger als 5V bis 6V zu ermöglichen.

Diese Aufgabe wird erfindungsgemäß dadurch gelöst, daß zwischen einem Eingang für die Betriebsspannung und einem Eingang eines Spannungsreglers ein Hochsetzsteller angeordnet ist, der bei einer Batteriespannung unterhalb eines vorgegebenen Schwellwertes aktiviert wird und die Batteriespannung auf mindestens den Schwellwert heraufsetzt. Vorzugsweise ist dabei vorgesehen, daß der Schwellwert bei etwa 5V bis 6V liegt.

Durch die erfindungsgemäßen Maßnahmen wird die Betriebssicherheit von Steuergeräten im unteren Spannungsbereich deutlich verbessert. So ist es beispielsweise mit der erfindungsgemäßen Stromversorgungseinrichtung möglich, Steuergeräte auch noch bei Spannungen bis hinab zu 3,5V zu betreiben. In diesem Bereich wird das Steuergerät auch nicht im Randbereich der Spezifikationen betrieben, so daß sich die Zuverlässigkeit erhöht. Außerdem ist zur Realisierung der erfindungsgemäßen Stromversorgungseinrichtung nur ein geringer Schaltungsaufwand erforderlich.

Eine besonders einfach zu realisierende Ausgestaltung der Erfindung besteht darin, daß der Hochsetzsteller von einer zwischen den Eingang und den Eingang des Spannungsreglers geschalteten Reihenschaltung aus einer Induktivität und einer Diode gebildet ist, wobei der Verbindungspunkt der Induktivität mit der Diode über einen Halbleiterschalter mit Massepotential und der Eingang des Spannungsreglers über einen Kondensator mit Massepotential verbunden ist, und daß der Halbleiterschalter bei Unterschreiten des Schwellwertes pulsierend gesteuert wird. Dabei ist vorzugsweise vorgesehen, daß der Halbleiterschalter ein Feldeffekttransistor ist.

Eine vorteilhafte Möglichkeit zum Aktivieren bzw. Stillsetzen des Hochsetzstellers ist gemäß einer Weiterbildung der Erfindung dadurch möglich, daß zur pulsierenden Ansteuerung des Halbleiterschalters ein Differenzverstärker vorgesehen ist, dessen Ausgang mit einem Steuereingang des Halbleiterschalters verbunden ist, dessen einem Eingang von einem Taktgeber Impulse zuführbar sind und dessen anderer Eingang über einen Spannungsteiler mit der Eingangsspannung des Spannungsreglers beaufschlagt ist.

Die Erfindung läßt zahlreiche Ausführungsformen zu. Eine davon ist schematisch in der Zeichnung anhand mehrerer Figuren dargestellt und nachfolgend beschrieben. Es zeigt:
Fig. 1 eine erfindungsgemäße Stromversorgungseinrichtung und
Fig. 2 eine erfindungsgemäße Stromversorgungseinrichtung in detaillierterer Darstellung.

Gleiche Teile sind in den Figuren mit gleichen Bezugszeichen versehen.

Eine Batterie 1, deren Spannung sehr stark schwanken und dabei unter 5V sinken kann, ist mit dem Eingang 2 der Stromversorgungseinrichtung verbunden. An einen Ausgang 3 der Stromversorgungseinrichtung ist ein Verbraucher 4 angeschlossen, der elektronische Schaltkreise enthält, die unterhalb einer Spannung von 5V nicht mehr zuverlässig arbeiten. Sinkt die Batteriespannung auf einen Wert unterhalb von 5,5V, ist der üblicherweise verwendete Spannungsregler 5 nicht mehr in der Lage, an seinem Ausgang eine Spannung von 5V abzugeben.

Bei der erfindungsgemäßen Stromversorgungseinrichtung ist daher vor dem Spannungsregler 5 ein Hochsetzsteller vorgesehen, der aus einer Induktivität 6, einer Diode 7, einem Halbleiterschalter 8 und einem Kondensator 9 besteht. Eine Steuerschaltung 10, der als Betriebsspannung die Ausgangsspannung des Spannungsreglers 5 zugeführt wird, erhält die Eingangsspannung des Spannungsreglers 5 und vergleicht diese mit einer Schwellwertspannung. Bei Unterschreiten liefert sie Steuerimpulse an den Halbleiterschalter 8, so daß der Hochsetzsteller aktiviert wird.

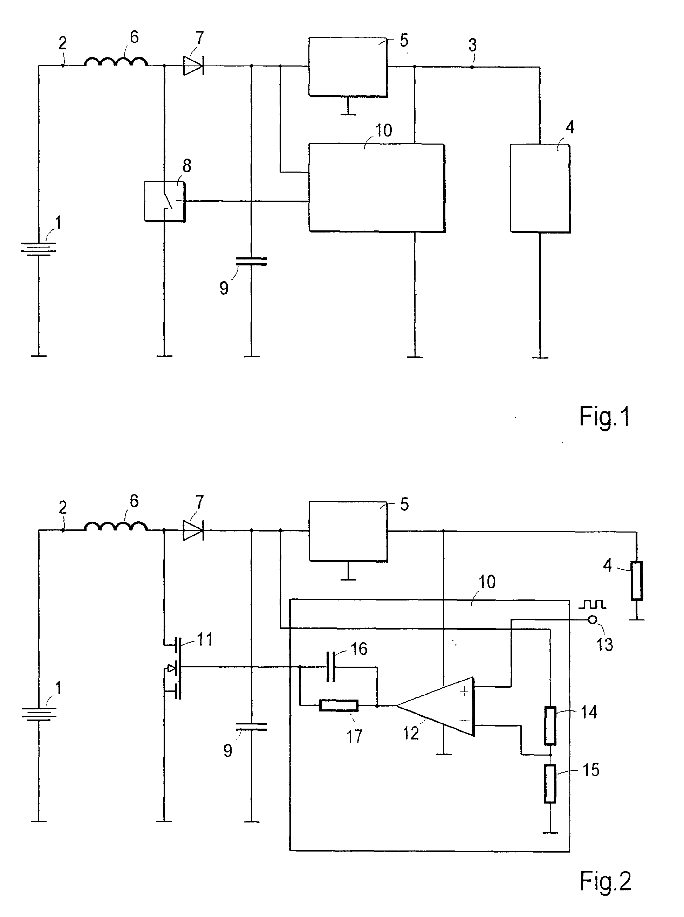

Bei dem ausführlicher dargestellten Ausführungsbeispiel nach Fig. 2 ist der Verbraucher 4 lediglich durch einen Widerstand angedeutet. Der Halbleiterschalter 8 wird von einem Feldeffekttransistor 11 gebildet. Die Steuerschaltung 10 besteht im wesentlichen aus einem Differenzverstärker 12, dessem nicht invertierenden Eingang über einen Eingang 13 ein Taktsignal von einem nicht dargestellten Taktgeber zugeführt wird. Die Eingangsspannung des Spannungsreglers 5 wird über einen Spannungsteiler 14, 15 zugeleitet. Der Ausgang des Differenzverstärkers 12 ist über eine Parallelschaltung aus einem Kondensator 16 und einem Widerstand 17 zur Anpassung an die Gate-Elektrode des Feldeffekttransistors 11 mit dieser verbunden. Solange die Eingangsspannung des Spannungsreglers 5 größer als 5,5V ist, leitet der Differenzverstärker 12 das Taktsignal nicht an den Feldeffekttransistor 11 weiter. Dieses erfolgt erst, wenn die Eingangsspannung des Spannungsreglers 5 unter diesen Wert fällt. Sinkt dann die Batteriespannung weiter, so behält die Eingangsspannung des Spannungsreglers 5 den Wert von etwa 5,5V bei.

## Patentansprüche

1. Stromversorgungseinrichtung, der eine Gleichspannung zuführbar ist und welche eine stabilisierte Spannung zum Betrieb einer elektronischen Schaltung in einem Kraftfahrzeug abgibt, **dadurch gekennzeichnet, daß** zwischen einem Eingang (2) für die Betriebsspannung und einem Eingang eines Spannungsreglers (5) ein Hochsetzsteller (6, 7, 8, 9) angeordnet ist, der bei einer Batteriespannung unterhalb eines vorgegebenen Schwellwertes aktiviert wird und die Batteriespannung auf mindestens den Schwellwert heraufsetzt.

2. Stromversorgungseinrichtung nach Anspruch 1, **dadurch gekennzeichnet, daß** der Schwellwert bei etwa 5V bis 6V liegt.

3. Stromversorgungseinrichtung nach einem der Ansprüche 1 oder 2, **dadurch gekennzeichnet, daß** der Hochsetzsteller von einer zwischen den Eingang (2) und den Eingang des Spannungsreglers (5) geschalteten Reihenschaltung aus einer Induktivität (6) und einer Diode (7) gebildet ist, wobei der Verbindungspunkt der Induktivität (6) mit der Diode (7) über einen Halbleiterschalter (8, 11) mit Massepotential und der Eingang des Spannungsreglers (5) über einen Kondensator (9) mit Massepotential verbunden ist, und daß der Halbleiterschalter (8, 11) bei Unterschreiten des Schwellwertes pulsierend gesteuert wird.

4. Stromversorgungseinrichtung nach Anspruch 3, **dadurch gekennzeichnet, daß** der Halbleiterschalter ein Feldeffekttransistor (11) ist.

5. Stromversorgungseinrichtung nach einem der vorhergehenden Ansprüche 3 oder 4, **dadurch gekennzeichnet, daß** zur pulsierenden Ansteuerung des Halbleiterschalters (11) ein Differenzverstärker (12) vorgesehen ist, dessen Ausgang mit einem Steuereingang des Halbleiterschalters (11) verbunden ist, dessen einem Eingang von einem Taktgeber Impulse zuführbar sind und dessen anderer Eingang über einen Spannungsteiler (14, 15) mit der Eingangsspannung des Spannungsreglers (5) beaufschlagt ist.
